# EUROPÄISCHE PATENTANMELDUNG

(11) **EP 3 412 457 A1**
(43) Veröffentlichungstag der Anmeldung: **12.12.2018**
(21) Anmeldenummer: 18173782.6
(22) Anmeldetag: 23.05.2018
(51) Int. Cl.: B32B 37/10, B32B 15/10, B32B 21/02, B32B 29/00

(54) **VERFAHREN ZUM HERSTELLEN EINER VERBUNDPLATTE UND VERBUNDPLATTE**

(30) Priorität: 07.06.2017 DE 102017112549
(71) Anmelder: Leitermann, Ludwig, 64732 Bad König (DE)
(72) Erfinder: Leitermann, Ludwig, 64732 Bad König (DE)
(74) Vertreter: Katscher Habermann Patentanwälte

(57) **Zusammenfassung**

Die Erfindung betrifft ein Verfahren zur Herstellung einer Verbundplatte (1), die eine Trägerplatte (2) aufweist. Zumindest auf einer Seite der Verbundplatte (1) ist eine unlösbar mit der Trägerplatte (2) verbundene Schichtenanordnung (3) angeordnet. Die Schichtenanordnung (3) weist zumindest eine erste harzgetränkte Papierschicht, eine Metallschicht (5) sowie eine zweite harzgetränkte Papierschicht (6) auf. Die erste harzgetränkte Papierschicht ist mit der Trägerplatte (2) verbunden, die Metallschicht (5) ist zwischen der ersten harzgetränkten Papierschicht und der zweiten harzgetränkten Papierschicht (6) angeordnet und die Metallschicht (5) ist als eine Metallfolie ausgebildet. In einem einzigen Pressschritt werden gleichzeitig alle Schichten der Schichtenanordnung (3) miteinander sowie die Trägerplatte (2) mit der Schichtenanordnung (3) verpresst, sodass mittels des erfindungsgemäßen Verfahrens in einem einzigen Arbeitsschritt die Verbundplatte (1) verpresst wird. Die Erfindung betrifft auch eine Verbundplatte (1), die nach dem erfindungsgemäßen Verfahren hergestellt ist.

## Beschreibung

Die Erfindung betrifft ein Verfahren zur Herstellung einer Verbundplatte, wobei die Verbundplatte eine Trägerplatte aufweist, wobei zumindest auf einer Seite der Verbundplatte eine unlösbar mit der Trägerplatte verbundene Schichtenanordnung angeordnet ist, wobei die Schichtenanordnung zumindest eine erste harzgetränkte Papierschicht, eine Metallschicht sowie eine zweite harzgetränkte Papierschicht aufweist, wobei die erste harzgetränkte Papierschicht mit der Trägerplatte in Anlage gebracht ist, wobei die Metallschicht zwischen der ersten harzgetränkten Papierschicht und der zweiten harzgetränkten Papierschicht angeordnet ist und wobei die Metallschicht als eine magnetische Metallfolie ausgebildet ist.

In vielen technischen Bereichen, beispielsweise in der Bau- oder Möbelindustrie, aber auch im Fahrzeugbau, werden Faser- und Spanplatten zur Lösung einer Vielzahl von konstruktiven Aufgaben verwendet. Sie werden beispielsweise als Dämmplatten, als Möbel- oder Küchenfronten, als Teile von Lautsprecherchassis oder Ähnliches genutzt. Um die Haltbarkeit oder Widerstandsfähigkeit derartiger Platten zu erhöhen sowie um eine Oberfläche einer Platte bzw. eines daraus hergestellten Bauelements mit einem Dekor zu versehen ist es aus der Praxis bekannt, diese Platten mit einer geeigneten Beschichtung zu beschichten. Eine Beschichtung auf der Basis von Kunststoffen kann sowohl die Haltbarkeit und Widerstandsfähigkeit erhöhen und beispielsweise eine wasserfeste Beschichtung bilden, als auch eine farbige und gegebenenfalls auch dreidimensional strukturierte Dekoroptik ermöglichen. Im Wesentlichen sind hierzu drei Verfahren zur Herstellung einer Kunststoffbeschichtung bekannt.

Um eine besonders widerstandsfähige Oberfläche zu erhalten ist es bekannt, eine Trägerplatte, die beispielsweise eine Faser- oder Spanplatte sein kann, mit einer Schichtpressstoffplatte zu verbinden, wofür üblicherweise ein bekanntes Klebe- und/oder Laminierverfahren eingesetzt wird. Diese unter anderem auch als High Pressure Laminate, bzw. abgekürzt als HPL bezeichneten Schichtpressstoffplatten sind üblicherweise aus einzelnen Papierbahnen zusammengesetzt, die mit einem duroplastischen Kunstharz getränkt sind und unter Hitze und Druck unlösbar miteinander verpresst werden.

Bei derartigen Schichtstoffpressplatten ist es üblich, dass mehrere Platten gleichzeitig in einem Pressvorgang hergestellt werden, wobei die Platten in einem Paket übereinander gestapelt innerhalb einer beheizbaren Presse angeordnet sind. Aufgrund der thermodynamischen Eigenschaften eines derartigen Plattenstapels und der für eine durchgängige unlösbaren Verbindung der einzelnen Schichten eines jeden Plattenstapels notwendigen Kerntemperatur des Stapels ist es erforderlich, dass während eines Pressvorgangs eine Presstemperatur von üblicherweise mehr als 180°C über einen Zeitraum von in der Regel mehr als 30 Min gehalten werden muss. Aufgrund dieser Parameter ist die Herstellung derartiger Platten sehr zeit- und kostenintensiv. Zudem wird ein weiterer Arbeitsschritt erforderlich, mit welchem die derart hergestellte Schichtstoffpressplatte mit der Trägerplatte verbunden, meistens verklebt oder erneut verpresst wird.

Darüber hinaus weisen die einzelnen Schichtstoffpressplatten nach ihrer Herstellung Oberflächen mit einer sehr geringen Rauigkeit auf, die für eine dekorative Außenseite vorteilhaft sein kann, jedoch nicht ausreichend hoch ist, um die Schichtstoffpressplatten direkt weiterverarbeiten zu können. Aus diesem Grund müssen die Schichtstoffpressplatten vor einer anschließenden Verbindung mit der Trägerplatte zumindest einseitig aufgeraut werden müssen, üblicherweise mittels eines abrasiven Verfahrens, beispielsweise mittels Schleifen. Durch diese notwendige Bearbeitung der Schichtstoffpressplatten vor der Verbindung mit der Trägerplatte wird der Aufwand zum Beschichten der Trägerplatte weiter erhöht.

Ein weiteres aus der Praxis bekanntes Verfahren zum Beschichten von Trägerplatten ist die Direktbeschichtung der Trägerplatte mit zwei Kunststofffolien, nämlich einer Dekorfolie und einer "Überpresser" genannten Schutzfolie. Die Kunststofffolien werden unter erhöhter Temperatur mit der Trägerplatte verpresst. Um eine gute Haftung zwischen den Kunststofffolien und der Trägerplatte zu erreichen ist es bekannt, dass als Haftmittel ein Kunstharz, beispielsweise Melamin, verwendet werden kann. Gegenüber der Beschichtung mit einer Schichtstoffpressplatte fehlt es bei der Direktbeschichtung an den harzgetränkten Papierbahnen, so dass die Beschichtung, die mittels der bekannten Verfahren zur Direktbeschichtung erzeugt wird, deutlich weniger widerstandsfähig ist, als eine Beschichtung, die auf der Verwendung von Schichtstoffpressplatten basiert.

Ein weiteres Verfahren, das als eine Abwandlung der Direktbeschichtung angesehen werden kann, ist die Folienbeschichtung. Bei der Folienbeschichtung wird auf die Trägerplatte lediglich eine Kunststofffolie aufgebracht, wobei die Folie beispielsweise eine mit einem Schutzlack beschichtete duroplastische Folie sein kann. Die Folienbeschichtung ist aufgrund ihrer geringen Stärke nur bei Trägerplatten mit einer feinkörnigen sowie homogenen Oberflächenstruktur sinnvoll nutzbar.

Ein weiterer Aspekt bei der Beschichtung von Trägerplatten ist das für bestimmte Anwendungszwecke angestrebte Verändern physikalischer Eigenschaften der Trägerplatte, insbesondere der magnetischen Eigenschaften. Um auf der Basis einer handelsüblichen Trägerplatte eine magnetische Verbundplatte zu realisieren ist es bekannt, dass in eine Schichtstoffpressplatte eine magnetische oder magnetisierbare Materialschicht eingebracht werden kann, und dass die derart magnetisierte Schichtstoffpressplatte dann mittels des bereits dargestellten Verfahrens auf die Trägerplatte aufgebracht wird. Als magnetische Materialschicht für Schichtstoffpressplatten sind beispielsweise magnetische Partikel, magnetische Gewebe, magnetische Folien oder Ähnliches bekannt.

Mit den derzeit bekannten Verfahren zur Direkt- oder Folienbeschichtung ist es allerdings nicht möglich, eine magnetische Verbundplatte herzustellen, die eine Trägerplatte aus Span oder MDF aufweist. Der Aufwand für die Herstellung einer magnetischen beschichteten Trägerplatte ist deshalb regelmäßig vergleichsweise hoch.

Als Aufgabe der vorliegenden Erfindung wird es daher angesehen ein Verfahren zur Herstellung einer Verbundplatte zur Verfügung zu stellen, das es ermöglicht eine magnetische Verbundplatte nach dem Prinzip der Direktbeschichtung herzustellen.

Diese Aufgabe wird erfindungsgemäß dadurch gelöst, dass in einem einzigen Pressschritt gleichzeitig alle Schichten der Schichtenanordnung miteinander sowie die Trägerplatte mit der Schichtenanordnung verpresst werden, sodass mittels des erfindungsgemäßen Verfahrens in einem einzigen Arbeitsschritt die Verbundplatte verpresst wird. Durch eine derartige Ausgestaltung des erfindungsgemäßen Verfahrens wird die Anzahl notwendiger Arbeitsschritte zur Herstellung der Verbundplatte gegenüber den bekannten Verfahren deutlich reduziert, da es im Rahmen des erfindungsgemäßen Verfahrens nicht mehr erforderlich ist, dass zunächst eine Schichtstoffpressplatte mit einer zusätzlichen magnetischen Schicht hergestellt werden muss und anschließend die magnetische Schichtstoffpressplatte vor einer Weiterverarbeitung nachbehandelt werden muss. Geeignete magnetische Metallfolien sind handelsüblich erhältlich, wobei die Metallfolien bereits mit einem haftungsvermittelnden Primer versehen sein können, der eine haftende Verbindung mit den angrenzenden harzgetränkten Papierschichten begünstigt.

Eine vorteilhafte Umsetzung des Erfindungsgedankens sieht vor, dass als Trägerplatte eine zumindest abschnittsweise als eine Spanplatte ausgebildete Trägerplatte verwendet wird. Die Verwendung harzgetränkter Papierschichten verleiht dem Schichtenverbund der nach dem erfindungsgemäßen Verfahren hergestellten Verbundplatte eine ausreichende Dicke und Festigkeit um auch Trägerplatten aus Materialien mit rauer und/ oder unebener Oberfläche verwenden zu können. Anders als bei den bekannten Verfahren zur Direktbeschichtung, mittels derer es nicht möglich ist, der Verbundplatte magnetische Eigenschaften unter Verwendung einer magnetischen Folie zu verleihen, ermöglichen es die nach dem erfindungsgemäßen Verfahren vorgesehenen harzgetränkten Papiere, das eine Metallfolie unlösbar in den Schichtenverbund der auf diese Weise hergestellten Verbundplatte eingebracht bzw. darin verpresst werden kann.

Eine vorteilhafte Ausgestaltung des Erfindungsgedankens sieht vor, dass als Trägerplatte eine zumindest abschnittsweise als eine mitteldichte Holzfaserplatte ausgebildete Trägerplatte verwendet wird. Es ist möglich und erfindungsgemäß vorgesehen, dass alle Faserplatten, die ähnliche Materialeigenschaften aufweisen wie mitteldichte Holzfaserplatten, zur Durchführung des erfindungsgemäßen Verfahrens verwendet werden können. Weiterhin können alle für eine Trägerplatte geeigneten Werkstoffe verwendet werden, sofern der betreffende Werkstoff mit der Schichtenanordnung verbunden werden kann. Dem Fachmann sind eine Vielzahl an plattenförmigen Werkstoffen mit derartigen Eigenschaften bekannt, die alle vorgesehen und geeignet sind, im Rahmen des erfindungsgemäßen Verfahrens verwendet zu werden.

Eine vorteilhafte Umsetzung des Erfindungsgedankens sieht vor, dass als harzgetränktes Papier zumindest einer der harzgetränkten Papierschichten ein mit einem Melaminharz getränktes Papier verwendet wird. Überraschenderweise hat sich herausgestellt, dass bei einer Verwendung im Rahmen des erfindungsgemäßen Verfahrens die durch mit einem Melaminharz getränkten Papiere erreichbare Haftung zwischen den Schichten der Schichtenanordnung ausreichend hoch ist, um auch eine Metallfolie unlösbar mit der Schichtenanordnung und der Trägerplatte zu verbinden. Hierbei ist es insbesondere nicht erforderlich, dass eine Perforation oder dreidimensionale Strukturierung der Metallfolie erfolgen muss. Die Verwendung perforierter Folien oder löchriger Metallstrukturen würde den Nachteil aufweisen, dass die magnetischen Eigenschaften des Metallobjekts durch Perforation oder Löcher gestört bzw. vermindert sein können und zudem perforierte Folien oder löchrige Metallstrukturen aufwendig in deren Herstellung sind.

Eine vorteilhafte Ausgestaltung des Erfindungsgedankens sieht vor, dass die Schichtenanordnung eine Deckschicht aufweist, wobei die Deckschicht in dem Pressschritt mit der Schichtenanordnung und der darunter befindlichen Trägerplatte verpresst wird, wobei die Deckschicht zumindest einlagig ist und wobei die Deckschicht eine der Trägerplatte abgewandte Außenseite der Schichtenanordnung bildet. Die Deckschicht stellt einen Bestandteil der Schichtenanordnung dar und wird in dem Pressschritt mit dieser verpresst. Es ist möglich und erfindungsgemäß vorgesehen, dass die Deckschicht ihrerseits mehrere Schichten mit unterschiedlichen physikalischen Eigenschaften aufweisen kann.

Eine vorteilhafte Umsetzung des Erfindungsgedankens sieht optional vor, dass ein Verpressen in dem Pressschritt bei einer Presstemperatur von höchstens 180°C, bevorzugt von höchstens 165°C und besonders bevorzugt von höchstens 150°C erfolgt. Die im Rahmen des erfindungsgemäßen Verfahrens vorgesehene Presstemperatur kann niedriger gehalten werden als dies bei der herkömmlichen Herstellung von Schichtstoffpressplatten der Fall wäre. Dies kann unter anderem auch auf eine deutlich geringere durchzuerhitzende Materialmenge im Bereich der Schichtenanordnung zurückgeführt werden. Es ist erfindungsgemäß vorgesehen, dass die Presstemperatur stets so niedrig als möglich angesetzt werden soll, um das erfindungsgemäße Verfahren möglichst energieeffizient zu gestalten.

Eine vorteilhafte Ausgestaltung des Erfindungsgedankens sieht vor, dass das Verpressen in dem Pressschritt bei einem Pressdruck von höchstens 35kg/cm², bevorzugt von höchstens 30kg/cm² und besonders bevorzugt von höchstens 25kg/cm² erfolgt. Allen bereits bekannten Verfahren zur Herstellung einer wie auch immer gearteten HPL-Schicht ist es gemein, dass sie ein Verpressen unter Druck erfordern. Es ist erfindungsgemäß vorgesehen, dass der Pressdruck bei dem erfindungsgemäßen Herstellungsverfahren so niedrig wie möglich gehalten werden soll, da die Erzeugung hoher Drücke energieintensiv ist.

Eine vorteilhafte Umsetzung des Erfindungsgedankens sieht ebenfalls optional vor, dass das Verpressen in dem Pressschritt über einen Presszeitraum von höchstens 90s, bevorzugt von höchstens 75s und besonders bevorzugt von höchstens 60s erfolgt. Um die Effizienz des erfindungsgemäßen Verfahrens weiter zu steigern ist es vorgesehen, dass auch die Pressdauer möglichst kurz gehalten werden soll. Hierdurch kann neben der Energieeffizienz auch die Produktivität gesteigert werden, da in der gleichen Arbeitszeiteinheit mit dem erfindungsgemäßen Herstellungsverfahren mehr magnetisch beschichtete Verbundplatten hergestellt werden können.

Gemäß einer vorteilhaften Ausgestaltung des Erfindungsgedankens ist vorgesehen, dass das Verpressen in dem Pressschritt mittels einer Kurztaktpresse erfolgt, wobei die Kurztaktpresse eine obere Pressplatte und eine untere Pressplatte aufweist, wobei zumindest eine der Pressplatten beheizbar ist, wobei die Pressplatten in einer Öffnungsposition und in einer Pressposition zueinander anordenbar sind, wobei in der Öffnungsposition eine Trägerplatte und eine der Trägerplatte zugeordnete Schichtenanordnung zwischen den Pressplatten angeordnet werden, wobei in dem Pressschritt die Pressplatten in der Pressposition angeordnet werden und die Trägerplatte mit der Schichtenanordnung verpresst wird, wobei nach dem Pressschritt die Pressplatten in der Öffnungsposition angeordnet werden und die Verbundplatte aus der Kurztaktpresse entnommen wird, und wobei mittels der beheizten Pressplatte die Presstemperatur aufrecht gehalten wird, sodass zwischen Pressschritten, bei in Öffnungsposition angeordneten Pressplatten keine wesentliche Abkühlung der Kurztaktpresse eintritt. Die Verwendung von Kurztaktpressen ist im Bereich der Herstellung von Furnier- oder Laminatbeschichtungen insbesondere bei der Möbelindustrie üblich und gut beherrscht. Bei heiß betriebenen Kurztaktpressen, also den Kurztaktpressen, bei denen ein Pressvorgang unter erhöhter Temperatur erfolgt, ist es unter energetischen und produktiven Gesichtspunkten sinnvoll, dass eine Abkühlung der Pressplatten so gut es geht verhindert wird. Dies wird bei dem erfindungsgemäßen Verfahren dadurch erreicht, dass ein durch die Presse zu erhitzender Abschnitt, hier die Schichtenanordnung, eine relativ geringe Materialmenge aufweist und so, anders als beispielsweise bei einer Herstellung von HPL, sehr schnell durcherhitzt werden kann, so dass die zu einer Herstellung einer unlösbaren Haftung zwischen den Schichten der Schichtanordnung notwendige Temperatur sehr schnell erreicht werden kann. Es ist auch möglich und erfindungsgemäß vorgesehen, dass die Kurztaktpresse ein Teil einer Taktstraße sein kann, wobei Zu- und Abfluss von Material mittels eines Förderbandes realisiert sein können. Dem Fachmann ist eine Vielzahl an technischen Lösungen bekannt, um das erfindungsgemäße Verfahren zu realisieren und/oder es in einen Produktionsprozess zu integrieren.

Eine vorteilhafte Ausgestaltung des Erfindungsgedankens sieht vor, dass in dem Pressschritt eine der Trägerplatte abgewandte Außenseite der Schichtenanordnung mit der oberen Pressplatte oder der unteren Pressplatte in Anlage gebracht ist, und wobei eine der Schichtenanordnung abgewandte Außenseite der Trägerplatte mit der unteren Pressplatte oder der oberen Pressplatte in Anlage gebracht ist. Um eine optimale Einleitung der durch die beheizte Pressplatte bereitgestellten thermischen Energie in die Schichtenanordnung zu erreichen ist es erfindungsgemäß vorgesehen, dass in dem Pressschritt jeweils nur eine Trägerplatte mit einer zugehörigen Schichtenanordnung zwischen dieser Trägerplatte und dieser Schichtenanordnung zuordenbaren Bereichen der Pressplatten angeordnet sein soll. Es ist erfindungsgemäß auch möglich, dass in dem Pressschritt gleichzeitig mehr als eine Verbundplatte innerhalb einer Kurztaktpresse hergestellt werden kann, wobei dann die jeweiligen Trägerplatten und Schichtenanordnungen nicht übereinander, sondern in vorteilhafter Weise nebeneinander in der Kurztaktpresse angeordnet sind.

Einer vorteilhaften Umsetzung des Erfindungsgedankens zufolge ist vorgesehen, dass bei dem Verpressen in dem Pressschritt mittels eines Pressblechs eine Struktur in eine der Trägerplatte abgewandte Außenseite der Schichtenanordnung geprägt wird. Dem Fachmann ist eine Vielzahl an Verfahren bekannt mittels derer eine Oberfläche bei einem Pressen in einer Kurztaktpresse geprägt werden kann. Diese sind alle geeignet und können optional vorgesehen sein, im Rahmen des erfindungsgemäßen Verfahrens verwendet zu werden.

Die Erfindung betrifft auch eine nach dem erfindungsgemäßen Verfahren hergestellte Verbundplatte, die eine Trägerplatte und zumindest eine auf einer Seite der Verbundplatte angeordnete und unlösbar mit der Trägerplatte verbundene Schichtenanordnung aufweist, wobei die Schichtenanordnung zumindest eine erste harzgetränkte Papierschicht, eine Metallschicht sowie eine zweite harzgetränkte Papierschicht aufweist, wobei die erste harzgetränkte Papierschicht mit der Trägerplatte verbunden ist, wobei die Metallschicht zwischen der ersten harzgetränkten Papierschicht und der zweiten harzgetränkten Papierschicht angeordnet ist und wobei die Metallschicht als eine Metallfolie ausgebildet ist. Bei einer besonders vorteilhaften Ausführungsform der erfindungsgemäßen Verbundplatte ist vorgesehen, dass die Metallfolie magnetisch ist. Dem Fachmann ist eine Vielzahl an magnetischen metallischen Werkstoffen bekannt, die zu Folien verarbeitbar sind. Diese sind alle geeignet und können für die erfindungsgemäße Verbundplatte verwendet werden.

Eine vorteilhafte Ausgestaltung des Erfindungsgedankens sieht vor, dass die Trägerplatte zumindest abschnittsweise als eine Spanplatte ausgebildet ist. Spanplatten sind günstig in der Herstellung und weisen gute mechanische und akustische Eigenschaften auf. Dem Fachmann sind aus der Praxis eine Vielzahl unterschiedlicher Ausführungsformen von Spanplatten bekannt, die alle geeignet sind, als Trägerplatte für die erfindungsgemäße Verbundplatte verwendet zu werden.

Eine vorteilhafte Umsetzung des Erfindungsgedankens sieht optional vor, dass die Trägerplatte zumindest abschnittsweise als eine mitteldichte Holzfaserplatte ausgebildet ist. Mitteldichte Holzfaserplatten werden üblicherweise aus Abfällen der holzverarbeitenden Industrie hergestellt, wodurch sie zum einen sehr günstig und zum anderen vielfältig anpassbar sind. Der Fachmann ist ohne weiteres in der Lage, aus der Vielzahl der bereits bekannten Holzfaserplatten, die verfügbar sind, diejenigen auszuwählen, die zur Realisierung der erfindungsgemäßen Verbundplatte und für deren bestimmungsgemäße Verwendung vorteilhaft geeignet sind.

Eine vorteilhafte Ausgestaltung des Erfindungsgedankens sieht vor, dass ein Papier zumindest einer der harzgetränkten Papierschichten mit einem Melaminharz getränkt ist. Der Begriff Melaminharz bezeichnet eine Gruppe von Kunstharzen, die durch die Verwendung geeigneter Zuschlagstoffe an unterschiedlichste Anforderungen anpassbar sind. Es ist möglich und optional vorgesehen, dass das zur Herstellung der erfindungsgemäßen Verbundplatte verwendete Melaminharz durch geeignete Zuschlagstoffe an das erfindungsgemäße Verfahren angepasst ist.

Eine vorteilhafte Umsetzung des Erfindungsgedankens sieht vor, dass die Schichtenanordnung zumindest eine Deckschicht aufweist, wobei die Deckschicht zumindest einlagig ist und wobei die Deckschicht eine der Trägerplatte abgewandte Außenseite der Schichtenanordnung bildet. Es ist bekannt, Oberflächen mit Deckschichten zu versehen, um beispielsweise die Widerstandsfähigkeit zu erhöhen, bestimmte physikalische Eigenschaften zu erreichen oder um die Optik der sichtbaren Oberfläche zu verändern. Dem Fachmann sind eine Vielzahl an Ausführungsformen von Deckschichten bekannt, die alle geeignet und erfindungsgemäß vorgesehen sein können, mit der erfindungsgemäßen Verbundplatte verwendet zu werden.

Eine vorteilhafte Ausgestaltung des Erfindungsgedankens sieht vor, dass die Deckschicht zumindest abschnittsweise als eine Dekorschicht ausgebildet ist. Die Dekorschicht kann beispielsweise als eine Kombination aus einer Dekorfolie, die ein Muster aufweist, und einer Klarsichtfolie, die das Muster durchscheinen lässt und die Dekorfolie vor Beschädigungen schützt, ausgebildet sein. Es ist auch möglich, dass die Dekorschicht eine Beschichtung sein kann, die einer Oberfläche der Verbundplatte eine spezielle Haptik und/oder ästhetische Gestaltung verleiht, beispielsweise eine so genannte Soft-Touch-Oberfläche, eine mattierte Oberfläche, eine Hochglanzoberfläche oder dergleichen. Dem Fachmann ist eine Vielzahl an Lösungen zur Realisierung einer Dekorschicht bekannt, die alle geeignet sind, mit der erfindungsgemäßen Verbundplatte verwendet zu werden.

Eine vorteilhafte Umsetzung des Erfindungsgedankens sieht beispielsweise vor, dass die Deckschicht eine Versiegelungsschicht aufweist, wobei die Versiegelungsschicht die Verbundplatte vor zumindest einem Umwelteinfluss, beispielsweise vor Feuchtigkeit schützt. Die Versiegelung von Oberflächen ist im Bereich der Industrie, insbesondere der Holz- und Möbelindustrie, weit verbreitet. Es sind Verfahren bekannt, um Oberflächen, insbesondere auch Holzoberflächen, eine gewünschte Widerstandsfähigkeit gegenüber unterschiedlichsten Umwelteinflüssen zu verleihen, beispielsweise gegenüber Feuchtigkeit, Strahlung, Abrieb oder Ähnlichem. Dem Fachmann ist eine Vielzahl an Lösungen bekannt, um unterschiedlichste Versiegelungsschichten zum Schutz von Verbundplatten zu realisieren, von denen alle vorgesehen und geeignet sein können, mit der erfindungsgemäßen Verbundplatte verwendet zu werden.

Weitere vorteilhafte Ausgestaltungen der erfindungsgemäßen Verbundplatte werden anhand von einem in der Zeichnung exemplarisch dargestellten Ausführungsbeispiel erläutert. Es zeigt:

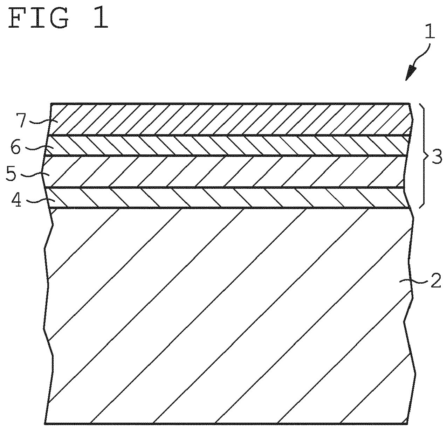

Figur 1 eine schematisch dargestellte Schnittansicht der Verbundplatte.

In der Figur 1 ist schematisch eine Schnittansicht einer Ausführungsforme der erfindungsgemäßen Verbundplatte 1 dargestellt. Die Verbundplatte 1 weist eine Trägerplatte 2 auf. Bei der dargestellten Ausführungsform der Verbundplatte 1 ist auf einer Seite der Verbundplatte 1 eine unlösbar mit der Trägerplatte 2 verbundene Schichtenanordnung 3 angeordnet. Die Schichtenanordnung 3 weist eine erste harzgetränkte Papierschicht 4, eine Metallschicht 5 sowie eine zweite harzgetränkte Papierschicht 6 auf. Die erste harzgetränkte Papierschicht 4 ist mit der Trägerplatte 2 in Anlage gebracht bzw. verbunden. Die Metallschicht 5 ist zwischen der ersten harzgetränkten Papierschicht 4 und der zweiten harzgetränkten Papierschicht 6 angeordnet. Bei der gezeigten Verbundplatte 1 ist die Metallschicht 5 als eine magnetische Metallfolie ausgebildet. Die Verbundplatte 1 weist auch eine Deckschicht 7 auf, wobei die Deckschicht 7 auf der zweiten harzgetränkten Papierschicht 6 angeordnet ist.

Die Schichten 4, 5, 6 und 7 der Schichtenanordnung 3 der dargestellten Verbundplatte 1 sind durch das in den harzgetränkten Papierschichten 4, 6 angeordnete Harz unlösbar miteinander verbunden. Bei dem zur Verbindung der Schichten 4, 5, 6 und 7 der Schichtenanordnung 3 und der dargestellten Verbundplatte 1 verwendeten Harz handelt es sich um ein Melaminharz.

Die Schichten 4, 5, 6 und 7 der Schichtenanordnung 3 sowie die Trägerplatte 2 sind in einem einzigen Pressschritt in einer Kurztaktpresse bei einem Druck von 25 kg/cm² und bei einer Temperatur von 150°C für eine Pressdauer von 70 s verpresst.

## Patentansprüche

1. Verfahren zur Herstellung einer Verbundplatte (1), wobei die Verbundplatte (1) eine Trägerplatte (2) aufweist, wobei zumindest auf einer Seite der Verbundplatte (1) eine unlösbar mit der Trägerplatte (2) verbundene Schichtenanordnung (3) angeordnet ist, wobei die Schichtenanordnung (3) zumindest eine erste harzgetränkte Papierschicht (4), eine Metallschicht (5) sowie eine zweite harzgetränkte Papierschicht (6) aufweist, wobei die erste harzgetränkte Papierschicht mit der Trägerplatte (2) in Anlage gebracht ist, wobei die Metallschicht (5) zwischen der ersten harzgetränkten Papierschicht (4) und der zweiten harzgetränkten Papierschicht (6) angeordnet ist und wobei die Metallschicht (5) als eine magnetische Metallfolie ausgebildet ist, **dadurch gekennzeichnet, dass** in einem einzigen Pressschritt gleichzeitig alle Schichten der Schichtenanordnung (3) miteinander sowie die Trägerplatte (2) mit der Schichtenanordnung (3) verpresst werden, sodass mittels des erfindungsgemäßen Verfahrens die Verbundplatte (1) in einem einzigen Arbeitsschritt verpresst wird.

2. Verfahren nach Anspruch 1, **dadurch gekennzeichnet, dass** als Trägerplatte (2) eine zumindest abschnittsweise als eine Spanplatte oder als eine mitteldichte Holzfaserplatte ausgebildete Trägerplatte (2) verwendet wird.

3. Verfahren nach einem der Ansprüche 1 oder 2, **dadurch gekennzeichnet, dass** als harzgetränktes Papier zumindest einer der harzgetränkten Papierschichten (4, 6) ein mit einem Melaminharz getränktes Papier verwendet wird.

4. Verfahren nach einem der Ansprüche 1 bis 3, **dadurch gekennzeichnet, dass** die Schichtenanordnung (3) eine Deckschicht (7) aufweist, wobei die Deckschicht (7) in dem Pressschritt mit der Schichtenanordnung (3) verpresst wird, wobei die Deckschicht (7) zumindest einlagig ist und wobei die Deckschicht (7) eine der Trägerplatte (2) abgewandte Außenseite der Schichtenanordnung (3) bildet.

5. Verfahren nach einem der Ansprüche 1 bis 4, **dadurch gekennzeichnet, dass** ein Verpressen in dem Pressschritt bei einer Presstemperatur von höchstens 180°C, bevorzugt von höchstens 165°C und besonders bevorzugt von höchstens 150°C erfolgt.

6. Verfahren nach einem der Ansprüche 1 bis 5, **dadurch gekennzeichnet, dass** das Verpressen in dem Pressschritt bei einem Pressdruck von höchstens 35kg/cm², bevorzugt von höchstens 30kg/cm² und besonders bevorzugt von höchstens 25kg/cm² erfolgt.

7. Verfahren nach einem der Ansprüche 1 bis 6, **dadurch gekennzeichnet, dass** das Verpressen in dem Pressschritt über einen Presszeitraum von höchstens 90s, bevorzugt von höchstens 75s und besonders bevorzugt von höchstens 60s erfolgt.

8. Verfahren nach einem der Ansprüche 1 bis 7, **dadurch gekennzeichnet, dass** das Verpressen in dem Pressschritt mittels einer Kurztaktpresse erfolgt, wobei die Kurztaktpresse eine obere Pressplatte und eine untere Pressplatte aufweist, wobei zumindest eine der Pressplatten beheizbar ist, wobei die Pressplatten in einer Öffnungsposition und in einer Pressposition zueinander anordenbar sind, wobei in der Öffnungsposition eine Trägerplatte (2) und eine der Trägerplatte (2) zugeordnete Schichtenanordnung (3) zwischen den Pressplatten angeordnet werden, wobei in dem Pressschritt die Pressplatten in Pressposition angeordnet werden und die Trägerplatte (2) mit der Schichtenanordnung (3) verpresst wird, wobei nach dem Pressschritt die Pressplatten in der Öffnungsposition angeordnet werden und die Verbundplatte (1) aus der Kurztaktpresse entnommen wird, und wobei mittels der beheizten Pressplatte die Presstemperatur aufrecht gehalten wird, sodass zwischen Pressschritten bei in Öffnungsposition angeordneten Pressplatten keine wesentliche Abkühlung der Kurztaktpresse eintritt.

9. Verfahren nach Anspruch 8, **dadurch gekennzeichnet, dass** in dem Pressschritt eine der Trägerplatte (2) abgewandte Außenseite der Schichtenanordnung (3) mit der oberen Pressplatte oder der unteren Pressplatte in Anlage gebracht ist, wobei eine der Schichtenanordnung (3) abgewandte Außenseite der Trägerplatte (2) mit der unteren Pressplatte oder mit der oberen Pressplatte in Anlage gebracht ist.

10. Verfahren nach einem der Ansprüche 1 bis 9, **dadurch gekennzeichnet, dass** bei dem Verpressen in dem Pressschritt mittels eines Pressblechs eine Struktur in eine der Trägerplatte (2) abgewandte Außenseite der Schichtenanordnung (3) geprägt wird.

11. Verbundplatte (1), die eine Trägerplatte (2) und zumindest eine auf einer Seite der Verbundplatte (1) angeordnete und unlösbar mit der Trägerplatte (2) verbundene Schichtenanordnung (3) aufweist, wobei die Schichtenanordnung (3) zumindest eine erste harzgetränkte Papierschicht (4), eine Metallschicht (5) sowie eine zweite harzgetränkte Papierschicht (6) aufweist, wobei die erste harzgetränkte Papierschicht (4) mit der Trägerplatte (2) verbunden ist, wobei die Metallschicht (5) zwischen der ersten harzgetränkten Papierschicht (4) und der zweiten harzgetränkten Papierschicht (6) angeordnet ist und wobei die Metallschicht (5) als eine magnetische Metallfolie ausgebildet ist, **dadurch gekennzeichnet, dass** die Verbundplatte (1) mittels eines Verfahrens nach einem der Ansprüche 1 bis 10 hergestellt ist.

12. Verbundplatte (1) nach Anspruch 11, **dadurch gekennzeichnet, dass** die Trägerplatte (2) zumindest abschnittsweise als eine Spanplatte oder als eine mitteldichte Holzfaserplatte ausgebildet ist.

13. Verbundplatte (1) nach einem der Ansprüche 11 oder 12, **dadurch gekennzeichnet, dass** ein Papier zumindest einer der harzgetränkten Papierschichten (4, 6) mit einem Melaminharz getränkt ist.

14. Verbundplatte (1) nach einem der Ansprüche 11 bis 13, **dadurch gekennzeichnet, dass** die Schichtenanordnung (3) zumindest eine Deckschicht (7) aufweist, wobei die Deckschicht (7) zumindest einlagig ist und wobei die Deckschicht eine der Trägerplatte (2) abgewandte Außenseite der Schichtenanordnung (3) bildet.

15. Verbundplatte (1) nach einem der Ansprüche 13 oder 14, **dadurch gekennzeichnet, dass** die Deckschicht (7) eine Versiegelungsschicht aufweist, wobei die Versiegelungsschicht die Verbundplatte (1) vor zumindest einem Umwelteinfluss, beispielsweise Feuchtigkeit, schützt.
